# EUROPEAN PATENT APPLICATION

(11) **EP 4 135 386 A1**
(43) Date of publication of application: **15.02.2023**
(21) Application number: 21795367.8
(22) Date of filing: 20.04.2021
(51) Int. Cl.: H04W 24/02, H04W 72/04

(54) **METHOD FOR TRANSMITTING PLCP PROTOCOL DATA UNIT (PPDU), AND RELATED DEVICE AND SYSTEM**

(30) Priority: 30.04.2020 CN 202010366107
(71) Applicant: Huawei Technologies Co., Ltd., Longgang District, Shenzhen, Guangdong 518129 (CN)
(72) Inventor: ZHAO, Wangsheng, Shenzhen, Guangdong 518129 (CN); HUANG, Changfu, Shenzhen, Guangdong 518129 (CN); LV, Jie, Shenzhen, Guangdong 518129 (CN)
(74) Representative: Gill Jennings & Every LLP
(86) International application number: PCT/CN2021/088261
(87) International publication number: WO 2021/218692

(57) **Abstract**

Embodiments of the present invention disclose a method for transmitting a wireless local area network packet structure PPDU, a related device, and a system, to effectively improve utilization of a spectrum resource and avoid a waste of the spectrum resource. The method includes: A sending device determines a plurality of subchannels. The plurality of subchannels include at least one first subchannel and at least one second subchannel. The sending device sends a first part of the PPDU by using the first subchannel. The first part includes preamble information and first data information. The sending device sends a second part of the PPDU by using the second subchannel. The second part includes only second data information, and the preamble information is used to indicate an allocation status of the first data information and the second data information.

## Description

This application claims priority to Chinese Patent Application No. 202010366107.3, filed with the China National Intellectual Property Administration on April 30, 2020 and entitled "METHOD FOR TRANSMITTING WIRELESS LOCAL AREA NETWORK PACKET STRUCTURE PPDU, RELATED DEVICE, AND SYSTEM", which is incorporated herein by reference in its entirety.

### TECHNICAL FIELD

This application relates to the field of wireless network technologies, and in particular, to a method for transmitting a wireless local area network packet structure PPDU, a related device, and a system.

### BACKGROUND

There are a plurality of subchannels between a sending device and a receiving device, and the sending device sends a wireless local area network packet structure (PLCP protocol data unit, PPDU) to the receiving device by using the plurality of subchannels.

However, if interference occurs on a subchannel, the sending device does not send the PPDU by using the subchannel on which interference occurs. One subchannel usually includes a plurality of time-frequency resource units (RUs). If interference occurs only on some RUs in the subchannel, using the solution in the conventional technology may cause an RU on which no interference occurs not to be used, resulting in a waste of a spectrum resource.

### SUMMARY

The present invention provides a method for transmitting a wireless local area network packet structure PPDU, a related device, and a system, to resolve a technical problem of a waste of a spectrum resource that is caused when a subchannel on which interference occurs cannot be used.

According to a first aspect, this application provides a method for transmitting a wireless local area network packet structure PPDU. The method includes: A sending device determines a plurality of subchannels. The plurality of subchannels include at least one first subchannel and at least one second subchannel. The sending device sends a first part of the PPDU by using the first subchannel. The first part includes preamble information and first data information. The sending device sends a second part of the PPDU by using the second subchannel. The second part includes only second data information, and the preamble information is used to indicate an allocation status of the first data information and the second data information.

It can be learned that when no interference occurs on the first subchannel and interference occurs on the second subchannel, the sending device may transmit the preamble information by using the first subchannel. The preamble information is used to indicate an allocation status of the second data information on the second subchannel. A receiving device may receive the preamble information based on the first subchannel on which no interference occurs, to receive the second data information on the second subchannel. The sending device sends the second data information to the receiving device by using the second subchannel on which interference occurs, so that utilization of a spectrum resource is effectively increased, and a waste of the spectrum resource is avoided.

Based on the first aspect, in an optional implementation, interference occurs on none of time-frequency resource units RUs included in the first subchannel, and the second subchannel includes at least one first RU and at least one second RU. The first RU is an RU on which interference occurs, and the second RU is an RU on which no interference occurs.

It can be learned that when interference occurs on the second subchannel, the sending device distinguishes between the first RU on which interference occurs and the second RU on which no interference occurs in the second subchannel, and sends the second data information by using the second RU, so that a waste of a spectrum resource that is caused when the second RU is not used is avoided.

Based on the first aspect, in an optional implementation, the preamble information is used to indicate a case in which the at least one second RU transmits the second data information.

It can be learned that the preamble information is sent to the receiving device by using the first subchannel on which no interference occurs, so that it is ensured that the receiving device can successfully receive the preamble information, and the receiving device can receive the second data information from the second RU based on an indication of the preamble information, thereby increasing a success rate of data information transmission.

Based on the first aspect, in an optional implementation, the preamble information is used to indicate not to allocate the at least one first RU.

It can be learned that the preamble information indicates, to the receiving device, the first RU on which interference occurs, so that the receiving device does not need to obtain a data information allocation status of the first RU, thereby improving data information transmission efficiency.

Based on the first aspect, in an optional implementation, both the first subchannel and the second subchannel are odd-numbered subchannels in the plurality of subchannels, or both the first subchannel and the second subchannel are even-numbered subchannels in the plurality of subchannels.

It can be learned that when both the first subchannel and the second subchannel are odd-numbered subchannels or even-numbered channels, the receiving device can directly obtain the preamble information from the first subchannel, and when the second subchannel on which interference occurs does not send the preamble information, a second receiving device can obtain the preamble information from the first subchannel, to receive data information, so that a success rate of data information transmission is ensured.

Based on the first aspect, in an optional implementation, the first subchannel and the second subchannel are any two of the plurality of subchannels.

It can be learned that when the second subchannel on which interference occurs does not send the preamble information, a second receiving device can obtain the preamble information from any first subchannel, to receive data information, so that a success rate and efficiency of data information transmission are ensured.

Based on the first aspect, in an optional implementation, before the sending device sends the second part of the PPDU by using the second subchannel, the method further includes: The sending device obtains the second data information to be sent to a receiving device. The sending device splits the second data information between the plurality of second RUs included in the second subchannel.

It can be learned that when the second data information is split between the plurality of second RUs, a single receiving device can use a plurality of second RUs, so that utilization of a spectrum resource is effectively improved.

Based on the first aspect, in an optional implementation, that the sending device sends a first part of the PPDU by using the first subchannel includes: The sending device obtains the first data information to be sent to a receiving device. The sending device splits the first data information between a plurality of RUs included in the first subchannel.

It can be learned that when the second data information is split between the plurality of RUs included in the first subchannel, a single receiving device can use a plurality of RUs, so that utilization of a spectrum resource is effectively improved.

Based on the first aspect, in an optional implementation, the method further includes: The sending device determines a spectrum resource from the plurality of subchannels. The spectrum resource includes a plurality of subcarriers. If the sending device determines to allocate the spectrum resource to the receiving device and a difference between SNRs of two subcarriers is greater than or equal to a preset value, the sending device divides the spectrum resource into a plurality of sub-spectrum resources. Modulation schemes of at least some of the plurality of sub-spectrum resources are different.

It can be learned that for a single receiving device, if it is determined that SNRs of a spectrum resource allocated to the receiving device are unbalanced, a subcarrier with a relatively large SNR included in the spectrum resource is not fully used. The sending device divides the spectrum resource into a plurality of sub-spectrum resources, and modulation schemes of at least some of the plurality of sub-spectrum resources are different. Therefore, the sending device can exchange data information with the receiving device based on the sub-spectrum resources, so that utilization of the subcarrier with the relatively large SNR is increased, and transmission performance of the spectrum resource is improved.

Based on the first aspect, in an optional implementation, the method further includes: The sending device determines a plurality of spectrum resources from the plurality of subchannels. Each spectrum resource includes a plurality of subcarriers. The sending device obtains a plurality of first differences corresponding to the plurality of spectrum resources. The first difference is a difference between a signal-to-noise ratio SNR when the spectrum resource is allocated to a first receiving device and an SNR when the spectrum resource is allocated to the second receiving device. The sending device allocates a spectrum resource corresponding to a relatively large value in the plurality of first differences to the first receiving device.

It can be learned that for a plurality of receiving devices, a spectrum resource with a relatively large SNR may be allocated to each receiving device, so that utilization of a subcarrier with a relatively large SNR is effectively increased, and transmission performance of the spectrum resource is improved.

Based on the first aspect, in an optional implementation, the method further includes: The sending device obtains a plurality of second differences corresponding to the plurality of spectrum resources. The second difference is a difference between an SNR when the spectrum resource is allocated to the second receiving device and an SNR when the spectrum resource is allocated to the first receiving device. The sending device allocates a spectrum resource corresponding to a relatively large value in the plurality of second differences to the second receiving device.

It can be learned that, to avoid a disadvantage that the second receiving device cannot exchange data information with the sending device because the sending device determines that first differences of all spectrum resources are relatively large and allocates all the spectrum resources to the first receiving device when the first receiving device is relatively close to the sending device, in this implementation, a spectrum resource to be allocated to the second receiving device is determined by using the second difference, so that data information exchange between the second receiving device and the sending device is effectively ensured.

Based on the first aspect, in an optional implementation, the method further includes: The sending device sends a trigger frame to the receiving device. The trigger frame is used to indicate the receiving device to send third data information to the sending device by using the second RU. The sending device receives the third data information from the receiving device by using the second RU.

It can be learned that the sending device notifies, by using the trigger frame, the receiving device of the second RU on which no interference occurs, so that the receiving device can send the third data information to the sending device by using the second RU, thereby effectively ensuring a success rate of sending the second data information to the sending device by the receiving device.

According to a first aspect, this application provides a method for transmitting a wireless local area network packet structure PPDU. The method includes: A receiving device receives, by using a first subchannel, preamble information included in a first part of a PPDU. The first part further includes first data information, the preamble information is used to indicate an allocation status of the first data information on the first subchannel and an allocation status of second data information on a second subchannel, and the second part of the PPDU includes only the second data information. The receiving device receives, based on the preamble information, the second data information by using the second subchannel.

For descriptions of beneficial effects of this aspect, refer to the first aspect. Details are not described again.

Based on the second aspect, in an optional implementation, interference occurs on none of time-frequency resource units RUs included in the first subchannel, and the second subchannel includes at least one first RU and at least one second RU. The first RU is an RU on which interference occurs, and the second RU is an RU on which no interference occurs.

Based on the second aspect, in an optional implementation, the preamble information is used to indicate a case in which the at least one second RU transmits the first data information.

Based on the second aspect, in an optional implementation, the preamble information is used to indicate not to allocate the at least one first RU.

Based on the second aspect, in an optional implementation, both the first subchannel and the second subchannel are odd-numbered subchannels in the plurality of subchannels, or both the first subchannel and the second subchannel are even-numbered subchannels in the plurality of subchannels.

Based on the second aspect, in an optional implementation, the first subchannel and the second subchannel are any two of the plurality of subchannels.

Based on the second aspect, in an optional implementation, the second data information is split between the plurality of second RUs included in the second subchannel, and that the receiving device receives, based on the preamble information, the second data information by using the second subchannel includes: The receiving device receives a plurality of bitstreams by using the plurality of second RUs. The receiving device combines the plurality of bitstreams into the second data information.

Based on the second aspect, in an optional implementation, the first data information is split between a plurality of RUs included in the first subchannel, and the method further includes: The receiving device receives a plurality of bitstreams by using the plurality of RUs included in the first subchannel. The receiving device combines the plurality of bitstreams into the second data information.

Based on the second aspect, in an optional implementation, the method further includes: The receiving device receives a trigger frame from a sending device. The trigger frame is used to indicate the receiving device to send third data information to the sending device by using the second RU. The receiving device sends, based on the trigger frame, the third data information to the sending device by using the second RU.

According to a third aspect, this application provides a sending device, including: a processing unit, configured to determine a plurality of subchannels, where the plurality of subchannels include at least one first subchannel and at least one second subchannel; and a transceiver unit, configured to send a first part of a PPDU by using the first subchannel. The first part includes preamble information and first data information. The transceiver unit is further configured to send a second part of the PPDU by using the second subchannel. The second part includes only second data information, and the preamble information is used to indicate an allocation status of the first data information and the second data information.

For descriptions of beneficial effects of this aspect, refer to the first aspect. Details are not described again.

Based on the third aspect, in an optional implementation, the second subchannel includes at least one second RU on which no interference occurs, and the processing unit is further configured to: obtain the second data information to be sent to a receiving device; and split the second data information between a plurality of second RUs included in the second subchannel.

Based on the third aspect, in an optional implementation, interference occurs on none of time-frequency resource units RUs included in the first subchannel, and the second subchannel includes at least one first RU and at least one second RU. The first RU is an RU on which interference occurs, and the second RU is an RU on which no interference occurs.

Based on the third aspect, in an optional implementation, the preamble information is used to indicate a case in which the at least one second RU transmits the second data information.

Based on the third aspect, in an optional implementation, the preamble information is used to indicate not to allocate the at least one first RU.

Based on the third aspect, in an optional implementation, both the first subchannel and the second subchannel are odd-numbered subchannels in the plurality of subchannels, or both the first subchannel and the second subchannel are even-numbered subchannels in the plurality of subchannels.

Based on the third aspect, in an optional implementation, the first subchannel and the second subchannel are any two of the plurality of subchannels.

Based on the third aspect, in an optional implementation, the processing unit is further configured to: determine a spectrum resource from the plurality of subchannels, where the spectrum resource includes a plurality of subcarriers; and if it is determined to allocate the spectrum resource to the receiving device and a difference between SNRs of two subcarriers is greater than or equal to a preset value, divide the spectrum resource into a plurality of sub-spectrum resources, where modulation schemes of at least some of the plurality of sub-spectrum resources are different.

Based on the third aspect, in an optional implementation, the processing unit is further configured to: determine a plurality of spectrum resources from the plurality of subchannels, where each spectrum resource includes a plurality of subcarriers; obtain a plurality of first differences corresponding to the plurality of spectrum resources, where the first difference is a difference between a signal-to-noise ratio SNR when the spectrum resource is allocated to a first receiving device and an SNR when the spectrum resource is allocated to a second receiving device; and allocate a spectrum resource corresponding to a relatively large value in the plurality of first differences to the first receiving device.

Based on the third aspect, in an optional implementation, the processing unit is further configured to: obtain a plurality of second differences corresponding to the plurality of spectrum resources, where the second difference is a difference between an SNR when the spectrum resource is allocated to the second receiving device and an SNR when the spectrum resource is allocated to the first receiving device; and allocate a spectrum resource corresponding to a relatively large value in the plurality of second differences to the second receiving device.

Based on the third aspect, in an optional implementation, the second subchannel includes at least one second RU on which no interference occurs, and the transceiver unit is further configured to: send a trigger frame to the receiving device, where the trigger frame is used to indicate the receiving device to send third data information to the sending device by using the second RU; and receive the third data information from the receiving device by using the second RU.

According to a fourth aspect, this application provides a receiving device, including: a transceiver unit, configured to receive, by using a first subchannel, preamble information included in a first part of a PPDU, where the first part further includes first data information; and a processing unit, configured to determine an allocation status of the first data information on the first subchannel and an allocation status of second data information on a second subchannel based on the preamble information. A second part of the PPDU includes only the second data information. The transceiver unit is further configured to receive, based on the preamble information, the second data information by using the second subchannel.

For descriptions of beneficial effects of this aspect, refer to the first aspect. Details are not described again.

Based on the fourth aspect, in an optional implementation, interference occurs on none of time-frequency resource units RUs included in the first subchannel, and the second subchannel includes at least one first RU and at least one second RU. The first RU is an RU on which interference occurs, and the second RU is an RU on which no interference occurs.

Based on the fourth aspect, in an optional implementation, the preamble information is used to indicate a case in which the at least one second RU transmits the first data information.

Based on the fourth aspect, in an optional implementation, the preamble information is used to indicate not to allocate the at least one first RU.

Based on the fourth aspect, in an optional implementation, both the first subchannel and the second subchannel are odd-numbered subchannels in the plurality of subchannels, or both the first subchannel and the second subchannel are even-numbered subchannels in the plurality of subchannels.

Based on the fourth aspect, in an optional implementation, the first subchannel and the second subchannel are any two of the plurality of subchannels.

Based on the fourth aspect, in an optional implementation, the second subchannel includes at least one second RU on which no interference occurs, the second data information is split between the plurality of second RUs included in the second subchannel, the transceiver unit is further configured to receive a plurality of bitstreams by using the plurality of second RUs, and the processing unit is further configured to combine the plurality of bitstreams into the second data information.

Based on the fourth aspect, in an optional implementation, the first data information is split between a plurality of RUs included in the first subchannel, the transceiver unit is further configured to receive a plurality of bitstreams by using the plurality of RUs included in the first subchannel, and the processing unit is further configured to combine the plurality of bitstreams into the second data information.

Based on the fourth aspect, in an optional implementation, the second subchannel includes at least one second RU on which no interference occurs, and the transceiver unit is further configured to: receive a trigger frame from a sending device, where the trigger frame is used to indicate the receiving device to send third data information to the sending device by using the second RU; and send, based on the trigger frame, the third data information to the sending device by using the second RU.

According to a fifth aspect, this application provides a network device, including a processor, a memory, and a transceiver.

The memory and the processor are interconnected by using a line, the processor and the transceiver are interconnected by using a line, the memory stores instructions, the processor is configured to perform processing related steps in either the first aspect or the second aspect, and the transceiver is configured to perform receiving/transmission related steps in either the first aspect or the second aspect.

According to a sixth aspect, this application provides a readable storage medium, including instructions. When the instructions run on an apparatus, the apparatus performs the method for transmitting a wireless local area network packet structure PPDU according to either the first aspect or the second aspect.

According to a seventh aspect, this application provides a program product including instructions. When the instructions run on an apparatus, the apparatus performs the method for transmitting a wireless local area network packet structure PPDU according to either the first aspect or the second aspect.

According to an eighth aspect, this application provides a communications system, including a sending device and a plurality of receiving devices. The receiving device communicates with the sending device through a radio link.

### BRIEF DESCRIPTION OF DRAWINGS

FIG. 1 is a schematic diagram of a structure of an embodiment of a communications system according to this application;
FIG. 2 is a spectrum division diagram of an embodiment of a subchannel according to this application;
FIG. 3 is a flowchart of steps of an embodiment of a method for transmitting a wireless local area network packet structure PPDU according to this application;
FIG. 4 is a schematic diagram of an embodiment of a frame format of a PPDU according to this application;
FIG. 5 is a schematic diagram of another embodiment of a frame format of a PPDU according to this application;
FIG. 6 is a schematic diagram of another embodiment of a frame format of a PPDU according to this application;
FIG. 7A is a schematic diagram of an embodiment of a spectrum resource according to this application;
FIG. 7B is a schematic diagram of another embodiment of a spectrum resource according to this application;
FIG. 8 is a flowchart of steps of another embodiment of a method for transmitting a wireless local area network packet structure PPDU according to this application;
FIG. 9 is a schematic diagram of a second subchannel according to this application;
FIG. 10 is a flowchart of steps of another embodiment of a method for transmitting a wireless local area network packet structure PPDU according to this application;
FIG. 11 is a schematic diagram of another embodiment of a spectrum resource according to this application;
FIG. 12 is a flowchart of steps of another embodiment of a method for transmitting a wireless local area network packet structure PPDU according to this application;
FIG. 13 is a schematic diagram of a structure of an embodiment of a network device according to this application; and
FIG. 14 is a schematic diagram of a structure of another embodiment of a network device according to this application.

### DESCRIPTION OF EMBODIMENTS

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by a person skilled in the art based on embodiments of the present invention without creative efforts shall fall within the protection scope of the present invention.

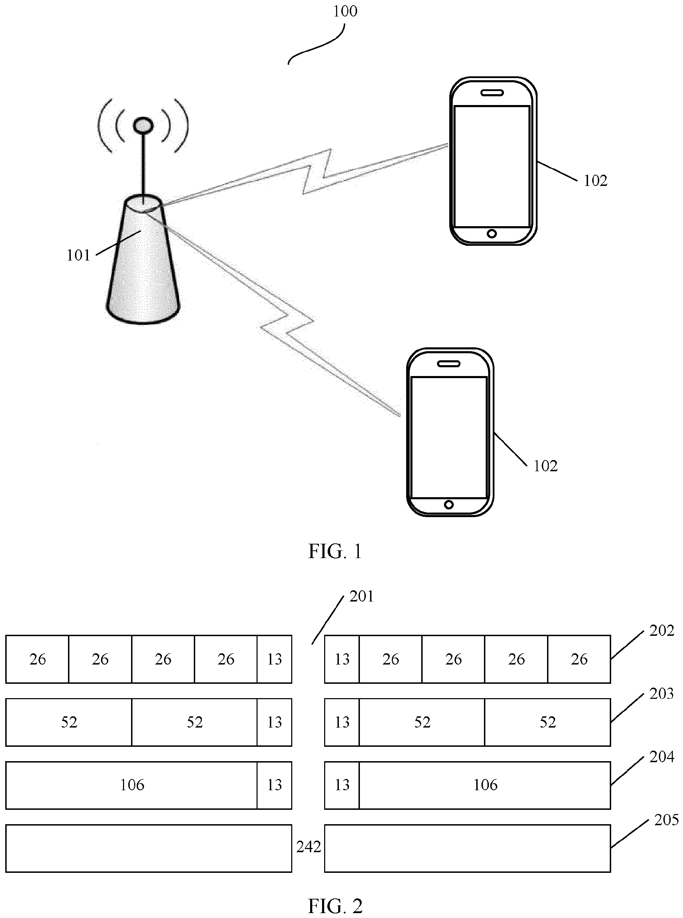

For better understanding a method for transmitting a wireless local area network packet structure PPDU provided in this application, the following first describes, with reference to FIG. 1, a communications system to which the method shown in this application is applied. FIG. 1 is a schematic diagram of a structure of an embodiment of a communications system according to this application.

As shown in FIG. 1, the communications system 100 includes an access point (access point, AP) 101 and a station (station, STA) 102 that are connected to each other. A specific quantity of STAs 102 included in the communications system is not limited in this embodiment, provided that each STA 102 communicates with the access point 101 through a radio link.

The AP 101 is an access point through which a mobile user enters a wired network. APs 101 are mainly deployed at home, inside a building, and inside a park, and have a typical coverage radius of tens to hundreds of meters. Certainly, the AP 101 may also be deployed outdoors. The AP 101 is equivalent to a bridge that connects the wired network and a wireless network. A main function of the AP 101 is to connect all the STAs 102 and then connect the wireless network to the wired network. Specifically, the AP 101 may be a terminal device or a network device with a wireless fidelity (wireless fidelity, Wi-Fi) chip, for example, a smartphone that provides an AP function or a service. The AP 101 is a device that supports a wireless local area network (wireless LAN, WLAN) standard. The WLAN standard includes but is not limited to 802.11ax, 802.11ac, 802.11n, 802.11g, 802.11b, 802.1 1a, or the like.

The STA 101 may be a wireless communications chip, a wireless sensor, or a wireless communications terminal, for example, a mobile phone supporting a Wi-Fi communications function, a tablet computer supporting a Wi-Fi communications function, a set top box supporting a Wi-Fi communications function, a smart television supporting a Wi-Fi communications function, a smart wearable device supporting a Wi-Fi communications function, a vehicle-mounted communications device supporting a Wi-Fi communications function, or a computer supporting a Wi-Fi communications function.

Both the AP 101 and the STA 102 can support full-duplex transmission, or only the AP 101 supports full-duplex transmission. When the AP 101 supports full-duplex transmission, the AP 101 can send a downlink PPDU to the STA 102, and receive an uplink PPDU sent by the STA 102. When the STA 102 supports full-duplex transmission, the STA 102 can receive a downlink PPDU sent by the AP 101, and can further send an uplink PPDU to the AP 101.

For better understanding the method shown in this application, the following first describes a spectrum resource between a sending device and a receiving device.

A total spectrum resource between the sending device and the receiving device includes a plurality of subchannels, and each subchannel includes one or more RUs. It should be noted that in this embodiment, an example in which the total spectrum resource includes a plurality of subchannels is used for description, and a specific quantity of subchannels is not limited. RUs have a plurality of sizes, for example, a size 26, a size 52, a size 106, and a size 242. An RU of the size 26 is a resource unit including 26 subcarriers, an RU of the size 52 is a resource unit including 52 subcarriers, an RU of the size 106 is a resource unit including 106 subcarriers, and an RU of the size 242 is a resource unit including 242 subcarriers. The following provides descriptions with reference to FIG. 2. FIG. 2 is a spectrum division diagram of an embodiment of a subchannel according to this application.

A spectrum resource of the subchannel shown in this example is 20 MHz. RU sizes in the case of the spectrum resource of 20 MHz are limited to 26, 52, 106, and 242. The spectrum block diagram of the 20 MHz spectrum resource shown in FIG. 2 includes four layers. An RU of the size 26 in the middle spans a direct current subcarrier 201. Nine RUs of the size 26 are distributed at a first layer 202, four RUs of the size 52 and one RU of the size 26 are distributed at a second layer 203, two RUs of the size 106 and one RU of the size 26 are distributed at a third layer 204, one RU of the size 242 is distributed at a fourth layer 205, and the RU of the size 242 is an entire spectrum resource of 20 M. A spectrum of a subchannel of 20 MHz may be a spectrum of a size of 242 subcarriers formed by any RU combination in the four layers. For example, the subchannel of 20 MHz is divided into four RUs, that is, four RUs of the size 106, the size 26, the size 52, and the size 52.

The spectrum resource of the subchannel may be alternatively 40 MHz, 80 MHz, or the like. In this application, an example in which the spectrum resource of the subchannel is 20 MHz is used for description.

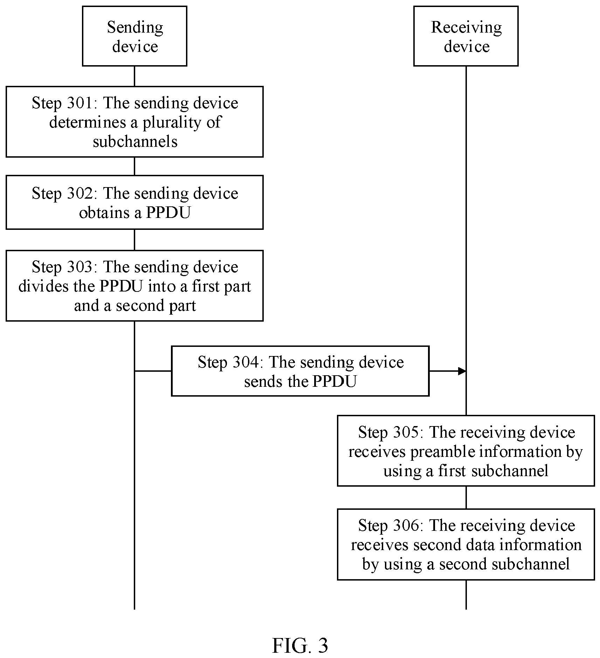

Based on FIG. 1 and FIG. 2, the following describes, with reference to FIG. 3, an execution procedure of the method for transmitting a wireless local area network packet structure PPDU provided in this application.

Step 301: A sending device determines a plurality of subchannels.

In this embodiment, the sending device (the AP 101 shown in FIG. 1) divides a total spectrum resource supported between the sending device and a receiving device (the STA 102 shown in FIG. 1) into a plurality of subchannels. In this embodiment, an example in which the total spectrum resource is 160 MHz is used, the sending device divides 160 MHz into eight subchannels, and a spectrum resource of each subchannel is 20 MHz. It should be noted that descriptions of a size of the spectrum resource of each subchannel in this embodiment are an optional example, and do not constitute a limitation.

The plurality of subchannels include at least one first subchannel and at least one second channel. The first subchannel is a subchannel on which no interference occurs. Specifically, interference occurs on none of RUs included in the first subchannel.

The second subchannel is a subchannel on which interference occurs. Specifically, the second subchannel includes a first RU and a second RU. A specific quantity of first RUs and a specific quantity of second RUs are not limited in this embodiment. The first RU is an RU on which interference occurs, and the second RU is an RU on which no interference occurs. The following further uses FIG. 2 as an example for description.

For example, a subchannel shown in FIG. 2 is a second subchannel on which interference occurs, and the second subchannel is divided into four RUs, that is, four RUs of a size 106, a size 26, a size 52, and the size 52. If interference occurs on the RU including 26 subcarriers, the RU including 26 subcarriers is a second RU, and the RU including 106 subcarriers and the two RUs each including 52 subcarriers are first RUs on which no interference occurs.

Step 302: The sending device obtains a PPDU.

In this embodiment, the sending device obtains a PPDU to be sent to one or more receiving devices. In this embodiment, an example in which the PPDU is sent to a plurality of receiving devices is used for description.

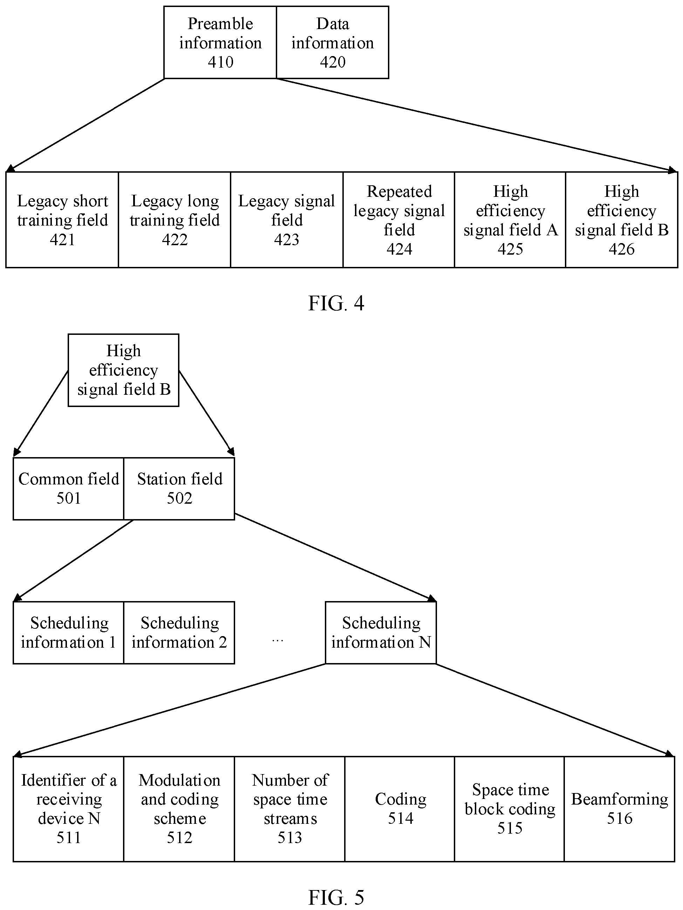

For better understanding, the following describes a frame format of the PPDU with reference to FIG. 4. FIG. 4 is a schematic diagram of an embodiment of a frame format of a PPDU according to this application.

The PPDU includes preamble information 410 and data information 420, and the data information 420 is a data frame to be sent to the receiving device. The preamble information 410 specifically includes a legacy short training field (legacy short training field, L-STF) 421, a legacy long training field (legacy long training field, L-LTF) 422, a legacy signal field (legacy signal field, L-SIG) 423, a repeated legacy signal field (Repeated L-SIG) 424, a high efficiency signal field A (high efficient signal field A, HE-SIG-A) 425, and a high efficiency signal field B (high efficient signal field B, HE-SIG-B) 426.

The L-STF 421 is used for frame detection, automatic gain control (automatic gain control, AGC), diversity detection, coarse frequency and/or time synchronization, and the like. The L-LTF 422 is used for fine frequency and/or time synchronization, channel prediction, and the like. The L-SIG 423 is used to send control information, and the L-SIG 423 may include information used to indicate a data rate and a data length. The repeated L-SIG 424 is used to enhance robustness of the L-SIG. The HE-SIG-A 425 is used to carry information, for example, bandwidth and an AP identifier (APID), read by all STAs in a current basic service set (basic service Set, BSS). It should be noted that descriptions of the preamble information 410 in this embodiment are an optional example, and do not constitute a limitation.

Specifically, the sending device divides the total spectrum resource into the plurality of subchannels, then divides each subchannel into a plurality of RUs, and transmits data to the receiving device by using the RU. To enable the receiving device to successfully receive the data information from the sending device, the sending device needs to send, by using the HE-SIG-B, information used to indicate resource scheduling to the receiving device, so that the receiving device can successfully receive the data information based on the HE-SIG-B. The following describes a structure of the HE-SIG-B with reference to FIG. 5.

As shown in FIG. 5, the HE-SIG-B includes a common field 501 and a station field 502. The common field 502 includes resource allocation indication information that needs to be read by different receiving devices, and the resource allocation indication information is used to indicate an allocation status of an RU for transmitting the data information, for example, a subchannel on which the RU used to transmit the data information and a quantity of subcarriers included in the RU. The station field 502 includes scheduling information to be sent to different receiving devices. The scheduling information is used to indicate a physical layer parameter for receiving the data information by the receiving device. Specifically, the HE-SIG-B includes N pieces of scheduling information. More specifically, the N pieces of scheduling information include scheduling information 1 to be sent to a receiving device 1, scheduling information 2 to be sent to a receiving device 2, ..., and scheduling information N to be sent to a receiving device N. A specific value of N is not limited in this embodiment.

The scheduling information N is used as an example. The scheduling information N includes an identifier 511 of the receiving device N, so that the receiving device N with the identifier 511 can receive data information based on information included in the scheduling information N. For example, the identifier 511 of the receiving device may be a station identifier (STA identifier, STA ID) or a station partial identifier (STA partial identifier, STA PAID). The scheduling information N further includes a modulation and coding scheme (modulation and coding scheme, MCS) 512, a number of space time streams (number of space time stream, NSTS) 513, coding (Coding) 514, space time block coding (space time block coding, STBC) 515, beamforming (beam forming, BF) 516, or the like.

The MCS 512 is used to indicate a modulation and coding scheme, the NSTS 513 is used to indicate a number of used space time streams, the coding 514 is used to indicate whether a low-density parity-check (low density parity check code, LDPC) code is used, the STBC 515 is used to indicate whether space time block coding (space time block coding, STBC) is used, and the BF 516 is used to indicate whether a beamforming technology is used. It should be noted that descriptions of content included in the scheduling information N in this embodiment are an optional example, and do not constitute a specific limitation. In another example, the scheduling information N may further include a cyclic redundancy code (cyclic redundancy code, CRC) or the like.

Step 303: The sending device divides the PPDU into a first part and a second part.

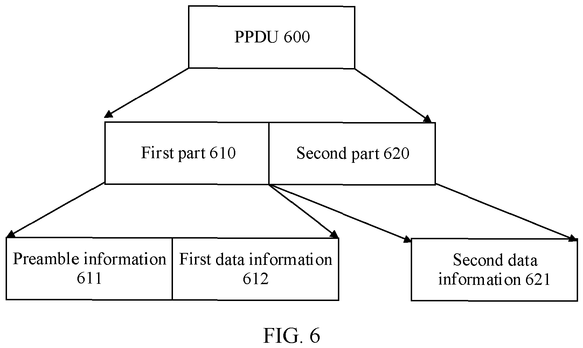

As shown in FIG. 6, when the sending device obtains a PPDU 600 to be sent to the receiving device, the sending device may divide the PPDU 600 into a first part 610 and a second part 620. Specifically, the first part 610 includes preamble information 611 and first data information 612, and the second part includes only second data information 621. For specific descriptions of the preamble information 611, refer to FIG. 4 and FIG. 5. Details are not described again. It should be noted that in this embodiment, one first part 610 and one second part 620 are used as examples for description, and do not constitute a limitation. In another example, there may be a plurality of first parts 610 and a plurality of second parts 620.

Step 304: The sending device sends the PPDU.

When the sending device divides the PPDU into the first part and the second part, the sending device sends the first part by using the first subchannel, and sends the second part by using the second subchannel. The following describes an optional process in which the sending device sends the PPDU.

### Example 1

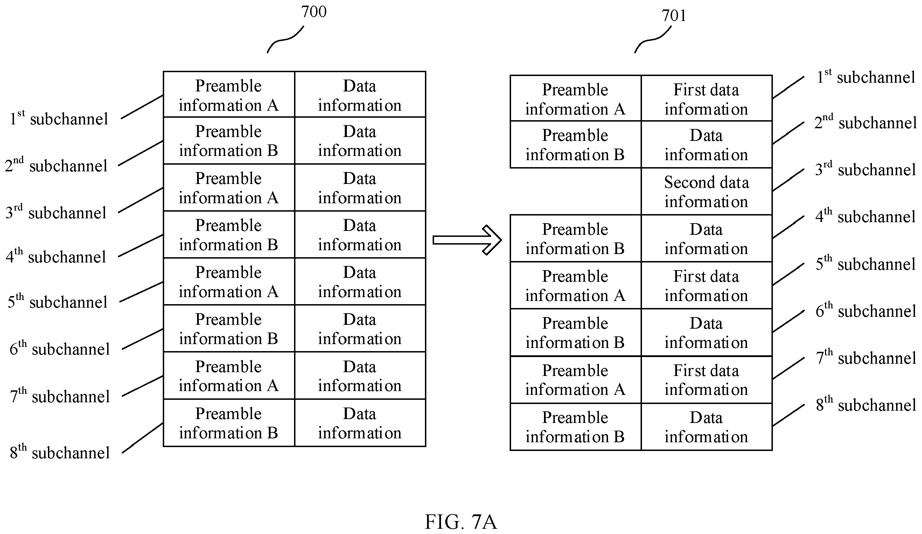

For a total spectrum resource 700 shown in FIG. 7A, when there are eight subchannels, namely, the 1^{st} subchannel, the 2^{nd} subchannel, ..., and the 8^{th} subchannel, between the sending device and the receiving device, preamble information transmitted on odd-numbered subchannels in the eight subchannels is the same. For example, the preamble information transmitted on the odd-numbered subchannels is preamble information A. Preamble information transmitted on even-numbered subchannels in the eight subchannels is the same. For example, the preamble information transmitted on the even-numbered subchannels is preamble information B.

Specifically, L-STFs, L-LTFs, L-SIGs, repeated L-SIGs, and HE-SIG-As included in the preamble information A and the preamble information B are the same, and an HE-SIG-B included in the preamble information A and an HE-SIG-B included in the preamble information B are different from each other.

If interference occurs between the sending device and the receiving device, the total spectrum resource between the sending device and the receiving device may be the total spectrum resource 701 shown in FIG. 7A. The first subchannel and the second subchannel shown in this embodiment are odd-numbered subchannels in all the subchannels between the sending device and the receiving device. For example, first subchannels are the 1^{st} subchannel, the 5^{th} subchannel, and the 7^{th} subchannel on which no interference occurs, and the second subchannel is the 3^{rd} subchannel on which interference occurs. The 3^{rd} subchannel no longer transmits preamble information, and the sending device transmits only second data information by using the 3^{rd} subchannel (the second subchannel). Preamble information transmitted by the sending device by using the 1^{st} subchannel, the 5^{th} subchannel, and the 7^{th} subchannel is used to indicate an allocation status of the second data information on the 3^{rd} subchannel.

It can be learned that the receiving device may determine, by using preamble information transmitted on the 1^{st} subchannel, the allocation status of the second data information transmitted on the 3^{rd} subchannel. That is, preamble information included in the first part of the PPDU is used to indicate an allocation status of first data information included in the first part of the PPDU and an allocation status of second data information included in the second part of the PPDU. Specifically, the receiving device can determine, based on the preamble information transmitted on the first subchannel, a specific location of the second data information included in the second part of the PPDU on the second subchannel, in other words, determine a second RU on which no interference occurs and on which the second data information is specifically located in the second subchannel.

### Example 2

The first subchannel and the second subchannel shown in this example are even-numbered subchannels in all subchannels between the sending device and the receiving device. For descriptions of the subchannels between the sending device and the receiving device, refer to Example 1. Details are not described again.

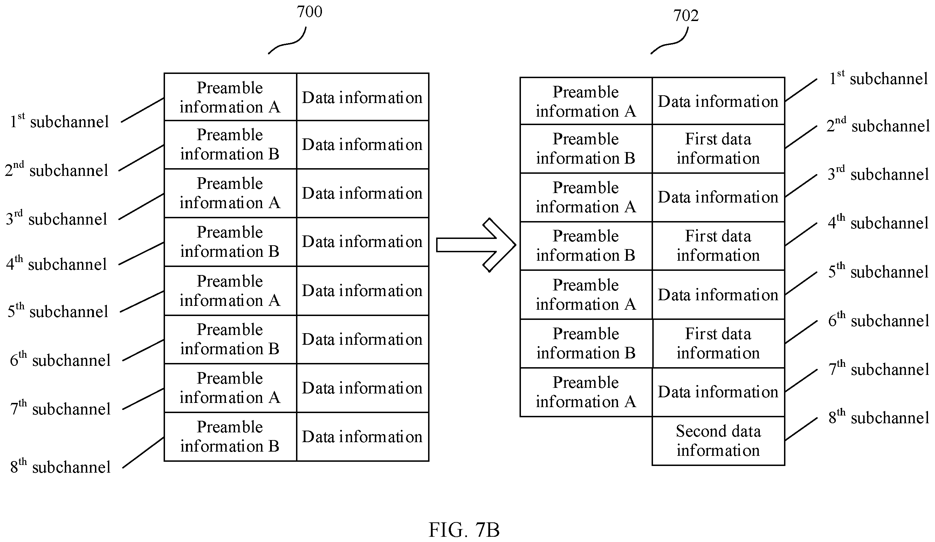

Refer to FIG. 7B. For descriptions of a total spectrum resource 701 shown in FIG. 7B, refer to FIG. 7A. Details are not described again. If interference occurs between the sending device and the receiving device, the total spectrum resource between the sending device and the receiving device may be the total spectrum resource 702 shown in FIG. 7B. The first subchannel and the second subchannel are even-numbered subchannels in all the subchannels between the sending device and the receiving device. That is, first subchannels are the 2^{nd} subchannel, the 4^{th} subchannel, and the 6^{th} subchannel on which no interference occurs, and the second subchannel is the 8^{th} subchannel on which interference occurs. The 8^{th} subchannel no longer transmits preamble information, and the sending device transmits only second data information by using the 8^{th} subchannel (the second subchannel). Preamble information transmitted by the sending device by using the 2^{nd} subchannel, the 4^{th} subchannel, and the 6^{th} subchannel is used to indicate an allocation status of the second data information on the 8^{th} subchannel.

It can be learned that the receiving device may determine, by using preamble information transmitted on the 2^{nd} subchannel, the allocation status of the second data information transmitted on the 8^{th} subchannel. That is, preamble information included in the first part of the PPDU is used to indicate an allocation status of first data information included in the first part of the PPDU and an allocation status of second data information included in the second part of the PPDU. That is, the receiving device can determine, based on the preamble information transmitted on the first subchannel, a specific location of the second data information included in the second part of the PPDU on the second subchannel, in other words, determine a second RU on which no interference occurs and on which the second data information is specifically located in the second subchannel.

### Example 3

In this example, a same L-STF, L-LTF, L-SIG, repeated L-SIG, HE-SIG-A, and HE-SIG-B included in preamble information are transmitted on different subchannels. The first subchannel and the second subchannel shown in this example are any two of all subchannels between the sending device and the receiving device. In other words, as shown in this example, preamble information used to indicate an allocation status of second data information transmitted on a subchannel on which interference occurs is located on any subchannel on which no interference occurs.

It can be learned that when interference occurs on the second subchannel, the sending device does not transmit the preamble information by using the second subchannel. To enable the receiving device to successfully receive the second data information transmitted on the second subchannel, the sending device may set, in any subchannel on which no interference occurs, the preamble information used to indicate the allocation status of the second data information transmitted on the second subchannel, so that successful data transmission is effectively ensured.

Step 305: The receiving device receives the preamble information by using the first subchannel.

It can be learned from the foregoing descriptions that the sending device transmits the first part of the PPDU to the receiving device by using the first subchannel, and the first part includes preamble information. It can be learned that the receiving device can receive the preamble information from the sending device by using the first subchannel.

In this embodiment, because no interference occurs on the first channel, the receiving device can receive, by using the first subchannel, the preamble information included in the PPDU.

In this embodiment, the receiving device reads an L-STF, an L-LTF, an L-SIG, a repeated L-SIG, an HE-SIG-A, and an HE-SIG-B including a target identifier that are in the preamble information. The target identifier is an identifier owned by the receiving device. The HE-SIG-B including the target identifier is used to indicate an allocation status of second data information, and the second data information is data information to be sent by the sending device to a receiving device with the target identifier. In addition, the second data information is carried only in a second RU in the second subchannel, and the second RU is an RU on which no interference occurs. For example, the second subchannel is divided into four RUs, namely, an RU including 106 subcarriers, an RU including 26 subcarriers, and two RUs each including 52 subcarriers. If interference occurs on the RU including 26 subcarriers and the two RUs each including 52 subcarriers, and no interference occurs on the RU including 106 subcarriers, the RU including 106 subcarriers is used as the second RU, and the sending device allocates the second data information to the RU including 106 subcarriers.

Step 306: The receiving device receives the second data information by using the second subchannel.

In this embodiment, an example in which the second data information to be sent by the sending device to the receiving device is located on the second subchannel on which interference occurs is used for description. The receiving device determines, based on the preamble information, that the second data information that needs to be received is located on one or more second RUs in the second subchannel, and the receiving device receives the second data information on the second RUs. Continuing with the example shown in step 305, the receiving device may determine, based on the preamble information, that the second data information is allocated to the second RU including 106 subcarriers, and the receiving device may receive the second data information on the second RU.

In this embodiment, an example in which the receiving device is configured to receive the second data information is used for description. In another example, the receiving device may alternatively receive first data information, where the first data information is located on the first subchannel on which no interference occurs, and the receiving device may receive the first data information from the first subchannel based on an indication of the preamble information. It can be learned that the preamble information shown in this embodiment is used to indicate the allocation status of the second data information on the second subchannel, and is further used to indicate an allocation status of the first data information on the first subchannel.

It can be learned that according to the method shown in this embodiment, when no interference occurs on the first subchannel and interference occurs on the second subchannel, the sending device may transmit the preamble information by using the first subchannel. The preamble information is used to indicate the allocation status of the second data information on the second subchannel. The receiving device may receive the preamble information based on the first subchannel on which no interference occurs, to receive the second data information on the second subchannel. It can be learned that when interference occurs on the second subchannel, the sending device may further send the second data information to the receiving device by using the second RU that is included in the second subchannel and on which no interference occurs, so that utilization of the spectrum resource is effectively increased, and a waste of the spectrum resource is avoided.

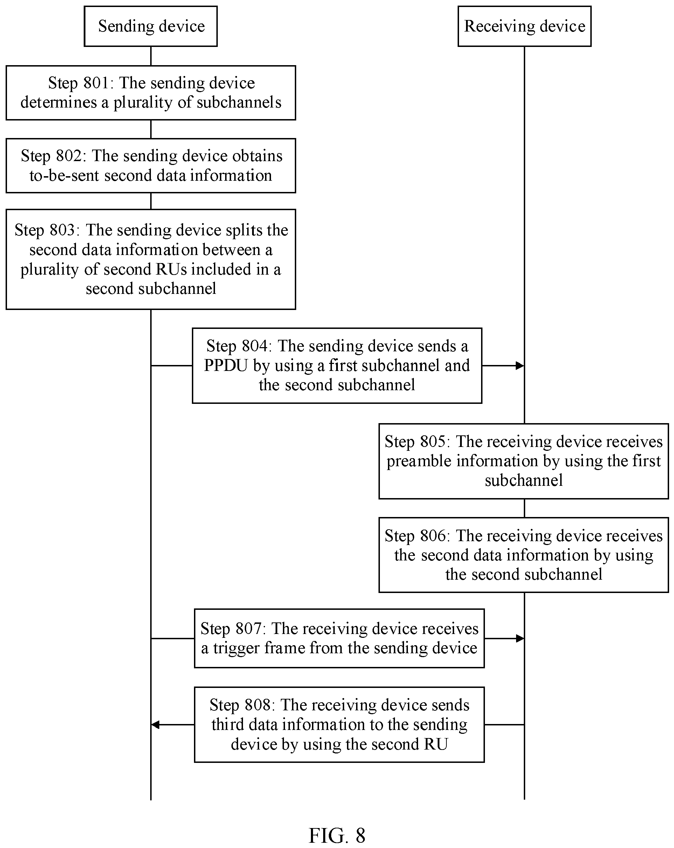

It can be learned from the embodiment shown in FIG. 3 that if the sending device determines that interference occurs on the first RU included in the second subchannel, data information is not allocated to the first RU. The following specifically describes, with reference to an embodiment shown in FIG. 8, a process of how a sending device allocates a plurality of second RUs on which no interference occurs to a receiving device.

Step 801: The sending device determines a plurality of subchannels.

For a specific execution process of step 801 shown in this embodiment, refer to step 301 shown in FIG. 3. Details are not described again.

Specifically, the sending device shown in this embodiment may puncture any subchannel other than a primary channel. Because the primary channel is used to schedule the receiving device, the primary channel does not support puncturing. In this embodiment, an example in which eight subchannels are included between the sending device and the receiving device, the 1^{st} subchannel is the primary channel, and the 2^{nd} to the 8^{th} subchannels are secondary channels is still used for description. It can be learned that the 1^{st} subchannel shown in this embodiment does not support puncturing, and all of the 2^{nd} to the 8^{th} subchannels support puncturing. Therefore, there are 2⁷ = 128 cases for subchannel puncturing in this embodiment. In this embodiment, non-allocation of data information to a subchannel is referred to as subchannel puncturing.

After any subchannel puncturing manner is supported, the sending device may notify the receiving device of a specific to-be-punctured subchannel by using preamble information. For descriptions of the preamble information, refer to the embodiment shown in FIG. 3. Details are not described again.

Step 802: The sending device obtains to-be-sent second data information.

The second data information shown in this embodiment is data information to be sent to a receiving device with a target identifier by using a second subchannel on which interference occurs.

Step 803: The sending device splits the second data information between a plurality of second RUs included in the second subchannel.

In this embodiment, if interference occurs on a first RU included in the second subchannel, the sending device may punctuate the first RU, and the sending device sends the second data information to the receiving device by using the second RU that is included in the second subchannel and on which no interference occurs. In this embodiment, non-allocation of data information to the first RU on which interference occurs is referred to as puncturing of the first RU.

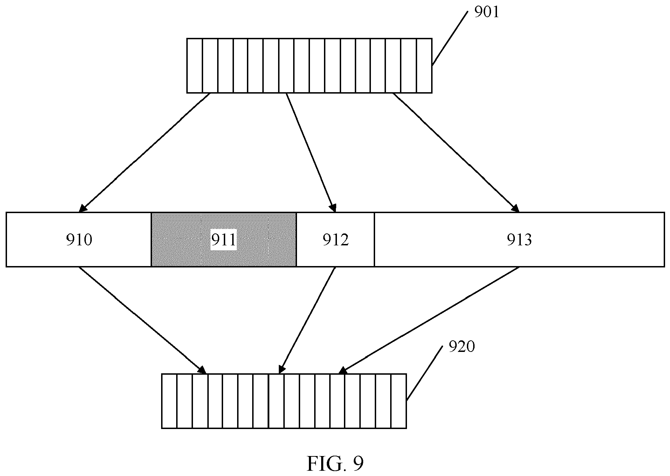

Optionally, when the second subchannel includes M second RUs on which no interference occurs, the sending device may allocate the M second RUs to N receiving devices, where both N and M are positive integers, and N is less than M. It can be learned that a quantity of receiving devices is less than a quantity of second RUs, and one receiving device can receive second data information by using a plurality of second RUs, so that the second RUs included in the punctured second subchannel are fully used. For better understanding, the following uses FIG. 9 as an example for description.

In the example shown in FIG. 9, the sending device splits second data information 901 between a plurality of second RUs that are included in the second subchannel and on which no interference occurs.

Specifically, the second subchannel is divided into four RUs (namely, an RU 910, an RU 911, an RU 912, and an RU 913). The RU 910 includes 52 subcarriers, the RU 911 includes 52 subcarriers, the RU 912 includes 26 subcarriers, and the RU 913 includes 106 subcarriers. The RU 911 is a first RU on which interference occurs, and the RU 910, the RU 912, and the RU 913 are second RUs on which no interference occurs. It can be learned that when the RU 911 is punctured, the second subchannel includes discontinuous spectrum resources.

The sending device splits the second data information 901 to be sent to the receiving device into the plurality of second RUs, namely, the RU 910, the RU 912, and the RU 913, included in the second subchannel, so that the receiving device can receive the second data information by using the RU 910, the RU 912, and the RU 913, so that one receiving device can use a plurality of second RUs to receive the second data information, thereby increasing utilization of a spectrum resource.

It should be noted that in this embodiment, an example in which the second data information is split based on a quantity of bits that can be carried in each second RU, so that the second data information is allocated to the plurality of second RUs is used for description. In another example, the sending device may first map the second data information to a media access control protocol data unit (MAC protocol data unit, MPDU), and then split the MPDU to be allocated to the plurality of second RUs.

Optionally, in this embodiment, an example in which the sending device transmits one PPDU by using a first subchannel and a second subchannel is used for description. In another example, different PPDUs may be transmitted by using different subchannels, or different PPDUs may be transmitted by using different RUs. For example, each second RU included in the second subchannel transmits one PPDU, and the PPDU is used to carry the second data information.

It should be noted that in this embodiment, an example of how to allocate a plurality of RUs on which no interference occurs to one receiving device when interference occurs on the second subchannel is used for description. In another example, the sending device may alternatively allocate, to one receiving device, a plurality of RUs included in the first subchannel on which no interference occurs. For a specific allocation process, refer to step 802. Details are not described again.

Step 804: The sending device sends the PPDU by using the first subchannel and the second subchannel.

For a process shown in step 804 shown in this embodiment, refer to step 304 shown in FIG. 3. Details are not described again in this embodiment.

In this embodiment, preamble information of the PPDU specifically includes a correspondence between the target identifier of the receiving device and the plurality of second RUs. Continuing with the example shown in FIG. 9, the preamble information included in the PPDU specifically includes a correspondence between the target identifier of the receiving device and the RU 910, the RU 912, and the RU 913, so that the receiving device with the target identifier determines, by using the correspondence, to receive the second data information in the RU 910, the RU 912, and the RU 913.

It should be noted that, in this embodiment, an example in which the sending device transmits the second data information by using the second subchannel is used for descriptions. If the sending device transmits first data information to the receiving device by using the first subchannel, the preamble information further includes a correspondence between the target identifier of the receiving device and a plurality of RUs to which the first data information is mapped in the first subchannel, so that the receiving device with the target identifier can determine, by using the correspondence, to receive the first data information from the RUs included in the first subchannel.

Step 805: The receiving device receives the preamble information by using the first subchannel.

Step 806: The receiving device receives the second data information by using the second subchannel.

For specific execution processes of step 805 and step 806 shown in this embodiment, refer to step 305 and step 306 shown in FIG. 3. Details are not described again.

Continuing with the example shown in FIG. 9, the receiving device determines, based on the preamble information, to receive bitstreams from the RU 910, the RU 912, and the RU 913 that correspond to the target identifier, and combines, into second data information 920, the bitstreams coming from the RU 910, the RU 912, and the RU 913.

Step 807: The receiving device receives a trigger frame from the sending device.

In this embodiment, if the sending device indicates the receiving device to transmit third data information, the sending device sends the trigger frame (Trigger Frames) to the receiving device. The trigger frame is used to indicate information such as a sending time at which the receiving device sends the third data information to the sending device, an RU used to carry the data information, and a cyclic prefix type.

Specifically, in this embodiment, if the sending device determines to receive the third data information from the receiving device by using the second RU that is included in the second subchannel and on which no interference occurs, the sending device may indicate the second RU to the receiving device by using the trigger frame.

Step 808: The receiving device sends the third data information to the sending device by using the second RU.

The receiving device sends the third data information based on the second RU indicated by the trigger frame. The sending device may receive, by using the second RU indicated by the trigger frame, the third data information sent by the receiving device.

Optionally, if the sending device determines to receive uplink service data from the receiving device by using an RU included in the first subchannel, the sending device may indicate, to the receiving device by using the trigger frame, the RU included in the first subchannel, and the receiving device may send the third data information by using the RU that is included in the first subchannel and that is indicated by the trigger frame.

According to the method shown in this embodiment, the sending device can transmit the second data information to the receiving device by using the second RU that is included in the second subchannel and on which no interference occurs, and the quantity of receiving devices is less than or equal to the quantity of second RUs, so that one receiving device can use a plurality of second RUs to receive second data information, thereby effectively ensuring full use of the second RUs included in the second subchannel and improving efficiency of transmitting data information to the receiving device.

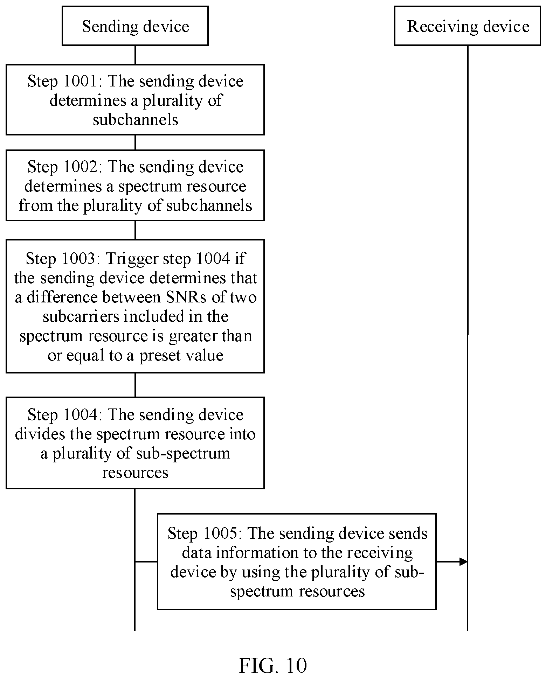

With reference to FIG. 10, the following describes, for the method shown in this embodiment, a process of effectively improving transmission performance of a spectrum resource for one receiving device.

Step 1001: A sending device determines a plurality of subchannels.

For a specific execution process of step 1001 shown in this embodiment, refer to step 301 shown in FIG. 3. Details are not described again.

Step 1002: The sending device determines a spectrum resource from the plurality of subchannels.

In this embodiment, the spectrum resource is allocated to one receiving device, and the sending device may send data information to the receiving device by using the spectrum resource. The spectrum resource includes a plurality of subcarriers. A size of the spectrum resource is not limited in this embodiment. For example, the spectrum resource may be 160 M, 80 M, or 20 M.

Step 1003: Trigger step 1004 if the sending device determines that a difference between SNRs of two subcarriers included in the spectrum resource is greater than or equal to a preset value.

In this embodiment, when the sending device allocates the spectrum resource to the receiving device, the receiving device may receive the data information based on the allocated spectrum resource. However, signal-to-noise ratios (signal noise ratio, SNR) of the plurality of subcarriers included in the spectrum resource are different, and for the spectrum resource, the sending device uses a modulation scheme of a subcarrier with a smallest SNR as modulation schemes of all the subcarriers included in the spectrum resource. It can be learned that transmission performance of the spectrum resource is limited by a subcarrier with a relatively small SNR.

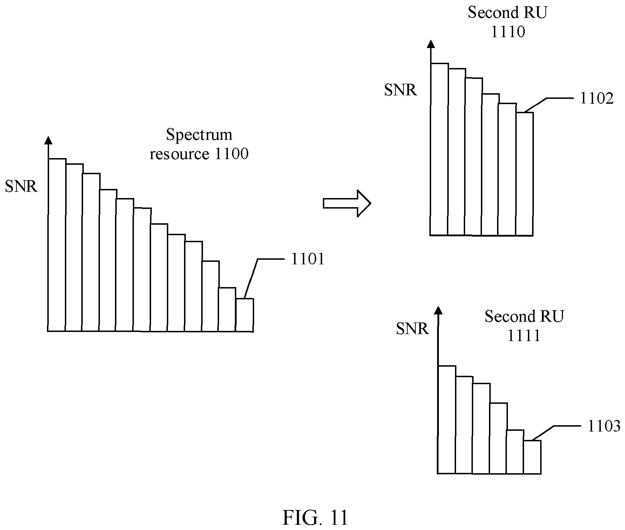

For example, a spectrum resource 1100 shown in FIG. 11 includes a plurality of subcarriers, and an SNR of a subcarrier 1101 in the plurality of subcarriers is the smallest. Therefore, transmission performance of the spectrum resource 1100 is limited by the SNR of the subcarrier 1101, and subcarriers that are included in the spectrum resource 1100 and that have larger SNRs are not fully used, reducing transmission performance of the spectrum resource.

To improve transmission performance of the spectrum resource, when the spectrum resource is allocated to the receiving device, the sending device first determines whether SNRs of the spectrum resource are balanced. Specifically, if the sending device determines that a difference between SNRs of two subcarriers included in the spectrum resource is greater than or equal to a preset value, it indicates that the SNRs of the spectrum resource are unbalanced.

Optionally, the sending device may determine, through calculation, whether a difference between a largest SNR value and a smallest SNR value in the plurality of SNRs of the plurality of subcarriers included in the spectrum resource is greater than or equal to the preset value. Further optionally, the sending device may calculate a difference between SNRs of any two subcarriers included in the spectrum resource. Provided that differences between SNRs of one or more pairs of subcarriers is greater than or equal to the preset value, the sending device determines that the SNRs of the spectrum resource are unbalanced.

Step 1004: The sending device divides the spectrum resource into a plurality of sub-spectrum resources.

When the sending device determines that the SNRs of the spectrum resource are unbalanced, the sending device divides the spectrum resource into the plurality of sub-spectrum resources. The sub-spectrum resource may be a second RU, a first subchannel, or an RU included in the first subchannel. Details are not limited in this embodiment. Continuing with the example shown in FIG. 11, the sending device divides the spectrum resource 1100 into two sub-spectrum resources, namely, a second RU 1110 and a second RU 1111. It can be learned that a modulation scheme of the second RU 1110 is different from a modulation scheme of the second RU 1111. It should be noted that, in this embodiment, when the spectrum resource is divided into the plurality of sub-spectrum resources, modulation schemes of only at least some of the plurality of sub-spectrum resources need to be different.

It can be learned that the modulation scheme of the second RU 1110 is limited by an SNR of a subcarrier 1102 with a smallest SNR value, and the SNR of the subcarrier 1102 is greater than the SNR of the subcarrier 1101 existing before the spectrum resource is divided, so that transmission performance of the second RU 1110 is effectively improved. The modulation scheme of the second RU 1111 is limited by an SNR of a subcarrier 1103 with a smallest SNR value, the SNR of the subcarrier 1103 obtained after the division is equal to the SNR of the subcarrier 1101 existing before the division, and a difference between SNRs of different subcarriers included in the second RU 1111 is less than a difference between SNRs of different subcarriers existing before the division, so that transmission performance of the second RU 1111 is improved.

Step 1005: The sending device sends the data information to the receiving device by using the plurality of sub-spectrum resources.

When the sub-spectrum resources shown in this embodiment are second RUs, the sending device may send the data information to the receiving device by using the second RUs. For a specific sending process, refer to the embodiments shown in FIG. 3 and FIG. 8. Details are not limited in this embodiment.

According to the method shown in this embodiment, for a single receiving device, if it is determined that SNRs of a spectrum resource allocated to the receiving device are unbalanced, a subcarrier with a relatively large SNR included in the spectrum resource is not fully used. The sending device divides the spectrum resource into a plurality of sub-spectrum resources, and modulation schemes of at least some of the plurality of sub-spectrum resources are different. Therefore, the sending device can exchange data information with the receiving device based on the sub-spectrum resources, so that utilization of the subcarrier with the relatively large SNR is increased, and transmission performance of the spectrum resource is improved.

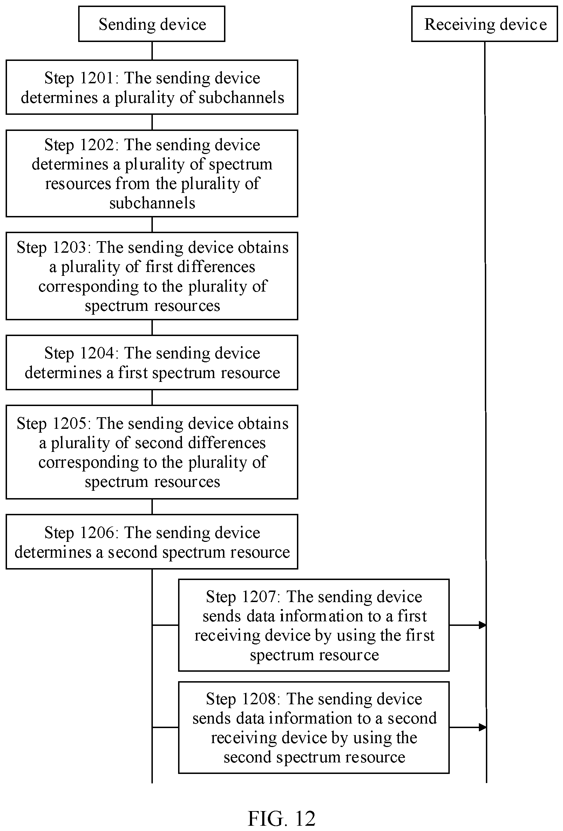

The embodiment shown in FIG. 10 describes a process of how to effectively improve transmission performance of a spectrum resource for one receiving device. The following describes, with reference to an embodiment shown in FIG. 12, how to effectively improve transmission performance of a spectrum resource for a plurality of receiving devices. In this embodiment, an example in which the plurality of receiving devices include a first receiving device and a second receiving device is used for description. It should be noted that, in this embodiment, an example in which the plurality of receiving devices include two receiving devices is used for description. In another example, a sending device may alternatively allocate a spectrum resource to more than two receiving devices.

Step 1201: The sending device determines a plurality of subchannels.

For a specific execution process of step 1201 shown in this embodiment, refer to step 301 shown in FIG. 3. Details are not described again.

Step 1202: The sending device determines a plurality of spectrum resources from the plurality of subchannels.

For descriptions of the spectrum resource, refer to step 1002 shown in FIG. 10. Details are not described again. It can be learned that different spectrum resources shown in this embodiment may include different second RUs, RUs included in different first subchannels, different first subchannels, or the like. Details are not limited in this embodiment, provided that different spectrum resources include different subcarriers.

Step 1203: The sending device obtains a plurality of first differences corresponding to the plurality of spectrum resources.

In this embodiment, the sending device obtains the first difference by using the following Formula 1:

Formula 1: First difference=Difference between an SNR when a spectrum resource is allocated to the first receiving device and an SNR when the spectrum resource is allocated to the second receiving device.

The sending device performs, based on Formula 1, calculation for all of the plurality of spectrum resources to obtain the plurality of first differences.

Step 1204: The sending device determines a first spectrum resource.

In this embodiment, the sending device determines, as the first spectrum resource, a spectrum resource corresponding to a relatively large value in the plurality of first differences, and allocates the determined first spectrum resource to the first receiving device.

For better understanding, the following provides descriptions with reference to Table 1.

**Table 1**

| | Spectrum resource A | Spectrum resource B | Spectrum resource C | Spectrum resource D |
|---|---|---|---|---|
| SNR when a spectrum resource is allocated to the first receiving device | 15 | 20 | 25 | 9 |
| SNR when a spectrum resource is allocated to the second receiving device | 7 | 13 | 16 | 2 |
| First difference | 8 | 7 | 9 | 7 |

It can be learned from Table 1 that there are four spectrum resources, namely, spectrum resources A, B, C, and D, between the sending device and the receiving devices. Using the spectrum resource A as an example, the sending device determines, based on Formula 1, that a first difference corresponding to the spectrum resource A is 8 decibels (dB). By analogy, a first difference corresponding to the spectrum resource B is 7 dB, a first difference corresponding to the spectrum resource C is 9 dB, and a first difference corresponding to the spectrum resource D is 7 dB.

The sending device may determine a spectrum resource with a relatively large first difference in the four first differences as the first spectrum resource, and allocate the first spectrum resource to the first receiving device. As shown in Table 1, the sending device determines the spectrum resource A and the spectrum resource C as first spectrum resources.

In this embodiment, to avoid a case in which the second receiving device cannot exchange data information with the sending device because the sending device determines that first differences of all spectrum resources are relatively large and allocates all the spectrum resources to the first receiving device when the first receiving device is relatively close to the sending device, a spectrum resource is allocated, through the following steps, to the second receiving device that is relatively far away from the sending device.

Step 1205: The sending device obtains a plurality of second differences corresponding to the plurality of spectrum resources.

In this embodiment, the sending device obtains the second difference by using the following Formula 2:
Formula 1: Second difference=Difference between an SNR when a spectrum resource is allocated to the second receiving device and an SNR when the spectrum resource is allocated to the first receiving device.

The sending device performs, based on Formula 2, calculation for all of the plurality of spectrum resources to obtain the plurality of second differences.

Step 1206: The sending device determines a second spectrum resource.

Specifically, the sending device determines, as the second spectrum resource, a spectrum resource corresponding to a relatively large value in the plurality of second differences, and allocates the determined second spectrum resource to the second receiving device.

For better understanding, the following provides descriptions with reference to Table 2.

**Table 2**

| | Spectrum resource A | Spectrum resource B | Spectrum resource C | Spectrum resource D |
|---|---|---|---|---|
| SNR when a spectrum resource is allocated to the first receiving device | 15 | 20 | 25 | 9 |
| SNR when a spectrum resource is allocated to the second receiving device | 7 | 13 | 16 | 2 |
| Second difference | -8 | -7 | -9 | -7 |

It can be learned from Table 2 that there are four spectrum resources, namely, spectrum resources A, B, C, and D, between the sending device and the receiving devices. Using the spectrum resource A as an example, the sending device determines, based on Formula 2, that a second difference corresponding to the spectrum resource A is 18 dB. By analogy, a second difference corresponding to the spectrum resource B is -7 dB, a second difference corresponding to the spectrum resource C is -9 dB, and a second difference corresponding to the spectrum resource D is -7 dB.

It can be learned that in the four second differences, relatively large second differences are the second difference corresponding to the spectrum resource B and the second difference corresponding to the spectrum resource D, and therefore the sending device determines the spectrum resource B and the spectrum resource D as second spectrum resources.

Step 1207: The sending device sends data information to the first receiving device by using the first spectrum resource.

Step 1208: The sending device sends data information to the second receiving device by using the second spectrum resource.

For a specific process in which the sending device sends the data information to the first receiving device and the second receiving device by using the allocated first spectrum resource and the allocated second spectrum resource, refer to the embodiments shown in FIG. 3 and FIG. 8. Details are not described again in this embodiment.

According to the method shown in this embodiment, for a plurality of receiving devices, a spectrum resource with a relatively large SNR may be allocated to each receiving device, so that utilization of a subcarrier with a relatively large SNR is effectively increased, and transmission performance of the spectrum resource is improved.

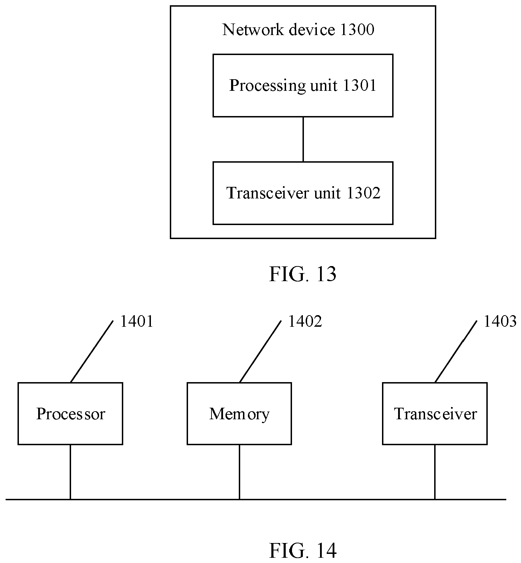

The foregoing describes the execution procedure of the method for transmitting a wireless local area network packet structure PPDU provided in this application. The following specifically describes, based on the foregoing method, a network device provided in this application. FIG. 13 is a schematic diagram of a structure of an embodiment of a network device according to this application. The network device 1300 includes a processing unit 1301 and a transceiver unit 1302 connected to the processing unit 1301.

If the network device 1300 is the sending device in the foregoing method embodiments, the processing unit 1301 is configured to determine a plurality of subchannels. The plurality of subchannels include at least one first subchannel and at least one second subchannel. The transceiver unit 1302 is configured to send a first part of a PPDU by using the first subchannel. The first part includes preamble information and first data information. The transceiver unit 1302 is further configured to send a second part of the PPDU by using the second subchannel. The second part includes only second data information, and the preamble information is used to indicate an allocation status of the first data information and the second data information.

Optionally, the second subchannel includes at least one second RU on which no interference occurs, and the processing unit 1301 is further configured to: obtain the second data information to be sent to a receiving device; and split the second data information between a plurality of second RUs included in the second subchannel.

Optionally, the processing unit 1301 is further configured to: determine a spectrum resource from the plurality of subchannels, where the spectrum resource includes a plurality of subcarriers; and if it is determined to allocate the spectrum resource to the receiving device and a difference between SNRs of two subcarriers is greater than or equal to a preset value, divide the spectrum resource into a plurality of sub-spectrum resources, where modulation schemes of at least some of the plurality of sub-spectrum resources are different.

Optionally, the processing unit 1301 is further configured to: determine a plurality of spectrum resources from the plurality of subchannels, where each spectrum resource includes a plurality of subcarriers; obtain a plurality of first differences corresponding to the plurality of spectrum resources, where the first difference is a difference between a signal-to-noise ratio SNR when the spectrum resource is allocated to a first receiving device and an SNR when the spectrum resource is allocated to a second receiving device; and allocate a spectrum resource corresponding to a relatively large value in the plurality of first differences to the first receiving device.

Optionally, the processing unit 1301 is further configured to: obtain a plurality of second differences corresponding to the plurality of spectrum resources, where the second difference is a difference between an SNR when the spectrum resource is allocated to the second receiving device and an SNR when the spectrum resource is allocated to the first receiving device; and allocate a spectrum resource corresponding to a relatively large value in the plurality of second differences to the second receiving device.

The second subchannel includes at least one second RU on which no interference occurs, and the transceiver unit 1302 is further configured to: send a trigger frame to the receiving device, where the trigger frame is used to indicate the receiving device to send third data information to the sending device by using the second RU; and receive the third data information from the receiving device by using the second RU.

If the network device 1300 is the receiving device in the foregoing method embodiments, the transceiver unit 1302 is configured to receive, by using a first subchannel, preamble information included in a first part of a PPDU. The first part further includes first data information. The processing unit 1301 is configured to determine an allocation status of the first data information on the first subchannel and an allocation status of second data information on a second subchannel based on the preamble information. A second part of the PPDU includes only the second data information. The transceiver unit 1302 is further configured to receive, based on the preamble information, the second data information by using the second subchannel.

Optionally, the second subchannel includes at least one second RU on which no interference occurs, the second data information is split between the plurality of second RUs included in the second subchannel, the transceiver unit 1302 is further configured to receive a plurality of bitstreams by using the plurality of second RUs, and the processing unit 1301 is further configured to combine the plurality of bitstreams into the second data information.

Optionally, the first data information is split between a plurality of RUs included in the first subchannel, the transceiver unit 1302 is further configured to receive a plurality of bitstreams by using the plurality of RUs included in the first subchannel, and the processing unit 1301 is further configured to combine the plurality of bitstreams into the second data information.

Optionally, the second subchannel includes at least one second RU on which no interference occurs, and the transceiver unit 1302 is further configured to: receive a trigger frame from a sending device, where the trigger frame is used to indicate the receiving device to send third data information to the sending device by using the second RU; and send, based on the trigger frame, the third data information to the sending device by using the second RU.

FIG. 14 is a schematic diagram of a structure of a network device according to this application. The network device includes a processor 1401, a memory 1402, and a transceiver 1403. The processor 1401, the memory 1402, and the transceiver 1403 are interconnected by using a line. The memory 1402 stores program instructions and data. The network device shown in this embodiment may be the sending device or the receiving device shown in the foregoing embodiments.

The memory 1402 stores program instructions and data that correspond to steps performed by the network device in the foregoing implementations corresponding to FIG. 3, FIG. 8, FIG. 10, and FIG. 12. The processor 1401 is configured to perform processing related steps performed by the network device in any one of the foregoing embodiments of FIG. 3, FIG. 8, FIG. 10, and FIG. 12. The transceiver 1403 is configured to perform receiving/transmission related steps performed by the network device in any one of the foregoing embodiments of FIG. 3, FIG. 8, FIG. 10, and FIG. 12.

In FIG. 3, the processor 1401 included in the network device used as the sending device is configured to perform step 301, step 302, and step 303, and the transceiver 1403 is configured to perform step 304. The transceiver 1403 included in the network device used as the receiving device is configured to perform step 305 and step 306.

In FIG. 8, the processor 1401 included in the network device used as the sending device is configured to perform step 801, step 802, and step 803, and the transceiver 1403 is configured to perform step 804. The transceiver 1403 included in the network device used as the receiving device is configured to perform step 805, step 806, step 807, and step 808.

In FIG. 10, the processor 1401 included in the network device used as the sending device is configured to perform step 1001, step 1002, step 1003, and step 1004, and the transceiver 1403 is configured to perform step 1005.

In FIG. 12, the processor 1401 included in the network device used as the sending device is configured to perform step 1201, step 1202, step 1203, step 1204, step 1205, and step 1206, and the transceiver 1403 is configured to perform step 1207 and step 1208.

An embodiment of this application further provides a digital processing chip. A circuit configured to implement functions of the foregoing processor 1401 and one or more interfaces are integrated into the digital processing chip. When a memory is integrated into the digital processing chip, the digital processing chip can complete the steps of the method in any one or more of the foregoing embodiments. When no memory is integrated into the digital processing chip, the digital processing chip may be connected to an external memory by using an interface. The digital processing chip implements, based on program code stored in the external memory, actions performed by the sending device or the receiving device in the foregoing embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting a wireless local area network packet structure PPDU, wherein the method comprises:
determining, by a sending device, a plurality of subchannels, wherein the plurality of subchannels comprise at least one first subchannel and at least one second subchannel;
sending, by the sending device, a first part of the PPDU by using the first subchannel, wherein the first part comprises preamble information and first data information; and
sending, by the sending device, a second part of the PPDU by using the second subchannel, wherein the second part comprises only second data information, and the preamble information is used to indicate an allocation status of the first data information and the second data information.

2. The method according to claim 1, wherein interference occurs on none of time-frequency resource units RUs comprised in the first subchannel, and the second subchannel comprises at least one first RU and at least one second RU, wherein the first RU is an RU on which interference occurs, and the second RU is an RU on which no interference occurs.

3. The method according to claim 2, wherein the preamble information is used to indicate a case in which the at least one second RU transmits the second data information.

4. The method according to claim 2 or 3, wherein the preamble information is used to indicate not to allocate the at least one first RU.

5. The method according to any one of claims 1 to 4, wherein both the first subchannel and the second subchannel are odd-numbered subchannels in the plurality of subchannels, or both the first subchannel and the second subchannel are even-numbered subchannels in the plurality of subchannels.

6. The method according to any one of claims 1 to 4, wherein the first subchannel and the second subchannel are any two of the plurality of subchannels.

7. The method according to any one of claims 2 to 4, wherein before the sending, by the sending device, a second part of the PPDU by using the second subchannel, the method further comprises:
obtaining, by the sending device, the second data information to be sent to a receiving device; and
splitting, by the sending device, the second data information between the plurality of second RUs comprised in the second subchannel.

8. The method according to claim 2, 3, 4, or 7, wherein the method further comprises:
sending, by the sending device, a trigger frame to the receiving device, wherein the trigger frame is used to indicate the receiving device to send third data information to the sending device by using the second RU; and
receiving, by the sending device, the third data information from the receiving device by using the second RU.

9. A method for transmitting a wireless local area network packet structure PPDU, wherein the method comprises:
receiving, by a receiving device by using a first subchannel, preamble information comprised in a first part of a PPDU, wherein the first part further comprises first data information, the preamble information is used to indicate an allocation status of the first data information on the first subchannel and an allocation status of second data information on a second subchannel, and the second part of the PPDU comprises only the second data information; and
receiving, by the receiving device based on the preamble information, the second data information by using the second subchannel.

10. The method according to claim 9, wherein interference occurs on none of time-frequency resource units RUs comprised in the first subchannel, and the second subchannel comprises at least one first RU and at least one second RU, wherein the first RU is an RU on which interference occurs, and the second RU is an RU on which no interference occurs.

11. The method according to claim 10, wherein the preamble information is used to indicate a case in which the at least one second RU transmits the first data information.

12. The method according to claim 10 or 11, wherein the preamble information is used to indicate not to allocate the at least one first RU.

13. The method according to any one of claims 9 to 12, wherein both the first subchannel and the second subchannel are odd-numbered subchannels in the plurality of subchannels, or both the first subchannel and the second subchannel are even-numbered subchannels in the plurality of subchannels.

14. The method according to any one of claims 9 to 12, wherein the first subchannel and the second subchannel are any two of the plurality of subchannels.

15. The method according to any one of claims 10 to 12, wherein the second data information is split between the plurality of second RUs comprised in the second subchannel, and the receiving, by the receiving device based on the preamble information, the second data information by using the second subchannel comprises:
receiving, by the receiving device, a plurality of bitstreams by using the plurality of second RUs; and
combining, by the receiving device, the plurality of bitstreams into the second data information.

16. The method according to claim 10, 11, 12, or 15, wherein the method further comprises:
receiving, by the receiving device, a trigger frame from a sending device, wherein the trigger frame is used to indicate the receiving device to send third data information to the sending device by using the second RU; and
sending, by the receiving device based on the trigger frame, the third data information to the sending device by using the second RU.

17. A sending device, comprising:
a processing unit, configured to determine a plurality of subchannels, wherein the plurality of subchannels comprise at least one first subchannel and at least one second subchannel; and
a transceiver unit, configured to send a first part of a PPDU by using the first subchannel, wherein the first part comprises preamble information and first data information, wherein
the transceiver unit is further configured to send a second part of the PPDU by using the second subchannel, wherein the second part comprises only second data information, and the preamble information is used to indicate an allocation status of the first data information and the second data information.

18. The sending device according to claim 17, wherein the second subchannel comprises at least one second RU on which no interference occurs, and the processing unit is further configured to:
obtain the second data information to be sent to a receiving device; and
split the second data information between a plurality of second RUs comprised in the second subchannel.

19. The sending device according to claim 17 or 18, wherein the second subchannel comprises at least one second RU on which no interference occurs, and the transceiver unit is further configured to:
send a trigger frame to the receiving device, wherein the trigger frame is used to indicate the receiving device to send third data information to the sending device by using the second RU; and
receive the third data information from the receiving device by using the second RU.

20. A receiving device, comprising:
a transceiver unit, configured to receive, by using a first subchannel, preamble information comprised in a first part of a PPDU, wherein the first part further comprises first data information; and
a processing unit, configured to determine an allocation status of the first data information on the first subchannel and an allocation status of second data information on a second subchannel based on the preamble information, wherein a second part of the PPDU comprises only the second data information, wherein
the transceiver unit is further configured to receive, based on the preamble information, the second data information by using the second subchannel.

21. The receiving device according to claim 20, wherein the second subchannel comprises at least one second RU on which no interference occurs, the second data information is split between a plurality of second RUs comprised in the second subchannel, the transceiver unit is further configured to:
receive a plurality of bitstreams by using the plurality of second RUs, and
the processing unit is further configured to:
combine the plurality of bitstreams into the second data information.

22. The receiving device according to claim 20 or 21, wherein the second subchannel comprises at least one second RU on which no interference occurs, and the transceiver unit is further configured to:
receive a trigger frame from a sending device, wherein the trigger frame is used to indicate the receiving device to send third data information to the sending device by using the second RU; and
send, based on the trigger frame, the third data information to the sending device by using the second RU.

23. A communications system, comprising a sending device and a receiving device, wherein the sending device is described in any one of claims 17 to 19, and the receiving device is described in any one of claims 20 to 22.

24. A network device, comprising a processor, a memory, and a transceiver, wherein
the memory and the processor are interconnected by using a line, the processor and the transceiver are interconnected by using a line, the memory stores instructions, and the instructions are used by the network device as a sending device to perform the steps according to claims 1 to 8.

25. A network device, comprising a processor, a memory, and a transceiver, wherein
the memory and the processor are interconnected by using a line, the processor and the transceiver are interconnected by using a line, the memory stores instructions, and the instructions are used by the network device as a receiving device to perform the steps according to claims 9 to 16.
